# EUROPEAN PATENT APPLICATION

(11) **EP 2 309 488 A1**
(43) Date of publication of application: **13.04.2011**
(21) Application number: 09171426.1
(22) Date of filing: 25.09.2009
(51) Int. Cl.: G10L 15/20

(54) **Speech recognition disambiguation of homophonic ending words**

(71) Applicant: SIEMENS AKTIENGESELLSCHAFT, 80333 München (DE)
(72) Inventor: Rosenbaum, Walter, 75116, Paris (FR)

(57) **Abstract**

The invention is related to a method for performing electronic speech recognition comprising the steps of: performing speech recognition (56) on an utterance; generating a recognition candidate list (24) comprising at least one recognition candidate (26) from the result of the speech recognition (56) by using a directory (28) of possible candidates (26).

For making discrete speech recognition processing more robust in noisy environment it is proposed to review (50) the candidate list (24) for existence of at least one noise sensitive candidate (26) being similar to at least one directory entry upon truncation of the directory entry, the candidate (26) or both; and depending on a review result re-performing speech recognition (58) on the utterance.

## Description

### BACKGROUND OF THE INVENTION

Speech recognition technology has made significant strides in the last decade. The focus has mainly been on continuous speech recognition where a subject speaker's monologue, such as dictation, is transformed by a speech recognizer unit from a series of analog energy pulses into phonemes that are then processed via directory match into prose.

Such applications are greatly facilitated by the target sound track being natural speech. The relative continuum of a single speaker's voice directly facilitates how the current generation of speech recognition algorithms detects what is a human utterance from possible background noise and is then able to reliably discern demarcation between words with out loosing leading edge audio. In more detail, once continuous speech recognition processing has determined it has a human voice's energy wave, the successive segmentation the utterance into words is not compromised by truncating and losing leading edge of words before realizing the energy pulse observed may be a human voice and starting speech recognition processing.

Additionally, when recognition processing a continuous grammatically based monologue, the speech recognition system gains the advantage, that ambiguities in recognition and resolution of speech into homophones via directory match can be disambiguated using grammatical models of the language being spoken. These "grammatical models" can be as simple as word level diagram statistic or a full linguistic model with sentence-level grammatical usage rules.

### SUMMARY OF THE INVENTION

It is an object of the invention to make discrete speech recognition processing more robust in noisy environment.

This object is solved by a method for performing electronic speech recognition comprising the steps of:
performing speech recognition on an utterance; generating a recognition candidate list comprising at least one recognition candidate from the result of the speech recognition by using a directory of possible candidates; reviewing the candidate list for existence of at least one noise sensitive candidate being similar to at least one entry of the directory of possible candidates upon truncation of the directory entry, the candidate or both; and depending on a review result re-performing speech recognition on the utterance.

The invention is especially useful for performing discrete word speech recognition where single words or commands are spoken without necessarily any context. Discrete word recognition is frequently used in industrial and uncontrolled ambient environments and hence the user's utterances may be embedded in significant background noise. Typical applications for discrete speech recognition are Commands and terminology like sorting destinations - e.g. city names, states, countries or people's names.

In such application and especially in noisy ambient environment, where speech recognition needs to detect start of a given word with no pre-knowledge that human speech is underway, the basic recognition problem is greatly complicated by frequently missing the leading edge of the utterance and hence distorting all the following recognition processing.

When using a large directory of possible speech recognition candidates problems arise with such directory entries which share a common ending. An utterance "Indianapolis" might be detected as "Anapolis" with a high recognition reliability score upon truncation of the first part of the utterance. So city names with common suffixes easily become indistinguishable as in: Gettysburg versus Gaithersburg. And relatively often where a significant part of the leading edge of the utterance has been cut, the correct recognition result does not appear in the candidate list, whereas the cut recognition result is scored very high.

To address this exposure of truncating, especially truncation of the leading edge of an utterance, there is the possibility of keeping a real-time recording of audio and upon detection of a human utterance backing up a few hundred milliseconds to attempt to recover the start of the word/utterance. This Backup and Restart Interval accomplishes its goal while frequently not adequately recovering the leading-edge of the utterance or overshoots and adds to the perceived word utterance pure noise that erodes total recognition reliability.

By analyzing the candidate list upon existence of a noise sensitive candidate the reliability of discrete speech recognition may be improved by finding those candidates most susceptible to misrecognition due to inaccurate edge detection, especially leading edge detection. Such analysis may then be used to re-perform speech recognition on the utterance, especially with at least one amended recognition parameter. The re-performance allows for checking the results, especially those most susceptible to misrecognition due to inaccurate leading edge detection.

The directory may contain all candidates possible for the speech recognition process. The recognition candidate list reflects the result of the speech recognition process and contains one or more candidates for correct recognition which are still ambiguous but are preferably those results which achieved the highest recognition reliability scores in the recognition process.

A noise sensitive candidate is a list candidate being similar to at least one directory entry if the list candidate or the directory entry or both are truncated. The truncation may be a truncation of a part of the candidate and/or entry, especially of a front end of the candidate and/or entry. So, a noise sensitive candidate may be a truncation sensitive candidate.

So the list candidate may be Eaton and a directory entry Wheaton. Upon truncation of the front end "Wh" Wheaton is identical with Eaton, so they have the highest possible similarity. So Eaton is a noise sensitive candidate. If the leading edge is set too late in time when analyzing the utterance "Wheaton", possibly due to noise, "Eaton" may be a list candidate with a high reliability score. On the other hand, if Wheaton is the list candidate and Eaton a directory entry, the same is true: Upon truncation of the front end "Wh" Wheaton is identical with Eaton, so they have the highest possible similarity. So Wheaton is a noise sensitive candidate and a truncation sensitive candidate. If the leading edge is set too early in time when analyzing the utterance "Eaton", possibly due to noise recorded shortly before the utterance, "Wheaton" may be a list candidate with a high reliability score. So "Eaton" and "Wheaton" both are noise sensitive candidates.

In another example the list candidate is "Seaton" and the directory entry "Wheaton". Upon truncation of the list candidate and the directory entry at their front end they become identical. Therefore "Seaton" and "Wheaton" are noise sensitive candidates.

The similarity may be measured by any suitable parameter, whereby the borderline between similarity and non-similarity is predefined by a predefined value of at least one predefined parameter. Preferably the similarity is a homophonic similarity. For example, "Boston" is commonly pronounced as "Bostin". When the leading edge is ill defined such utterance can readily result in the discrete speech recognition result of "Austin". "ostin" and "Austin" are homophonic. Homophonic includes homographic in this context.

In a preferred embodiment of the invention a pre-analysis of the directory is performed, and directory entries being similar to other directory entries upon truncation of at least one of the entries are marked as being truncation sensitive entries. This marking may be used for analyzing the candidate list upon existence of a truncation sensitive candidate. The marking may be performed by assigning a flag or the like to the respective entry in the directory used for generating the candidate list. Another possibility lies in grouping all truncation sensitive entries in a special directory or register and looking up the list candidates in this register.

Yet another way of analyzing the list candidates lies in performing a sensitivity algorithm on each list candidate. The algorithm may contain certain criteria for finding at least most of the existing truncation sensitive candidates, and it may - in a most basic version - filter all candidates with endings like "burg", "ton" "city", and the like.

The algorithm or the directory pres-analysis is preferably used to specially adjust the time window of the Backup and Restart Interval, or speaking more general: the edge of operation that separates the recognition segment of the utterance upon which the recognition procedure is performed from another segment, especially the preceding segment.

By performing speech recognition on such amended recognition segment of the utterance it is possible to compare properties of successive speech recognition reruns to assess if a leading edge of the utterance containing significant phonetic redundancy has been omitted. So, preferably, upon existence of a truncation sensitive candidate in the candidate list the edge of operation is adjusted, and the speech recognition procedure upon the utterance is re-performed using the adjusted edge of operation. A further candidate list may be generated from the result of the re-performed speech recognition by using the directory. A final candidate may be chosen from one of the lists as speech recognition final result.

The method also has specific efficacy that it allows the results of successive recognition passes with amended edge to be examined to iteratively improve the recognition segment to recover properly an utterance's leading edge. So the steps of adjusting the edge and re-performing speech recognition may be repeated if a new truncation sensitive candidate appeared in the most recent candidate list compared to the candidate list before. Such new truncation sensitive candidate indicates that the position of the edge is still ambiguous.

Another possible parameter for iteration is an increase or decrease of a recognition reliability score. So an adjustment of the edge of operation and re-performance of speech recognition may be repeated if an increase of a recognition reliability score in the most recent candidate list appears compared to the candidate list before. The increase may be an increase of a recognition reliability score of the list's top candidate, or an average reliability score of a certain number of the list's top candidates.

In another preferable embodiment of the invention identifying information associated with a good to be processed, like a parcel or any other postal item, is read by an operator generating thus the utterance, wherein the way of processing depends on this information. So processing the good like sorting may be performed according to the result of the speech recognition process.

The problem indicated above is solved as well by a speech recognition system comprising an operation part being prepared for performing speech recognition on an utterance and for generating a candidate list of probable results by using a directory of possible candidates. In a first embodiment of the invention the system further comprises a register containing directory entries marked as truncation sensitive entries if such entry is similar to at least one other directory entry upon truncation of at least one of the entries. The register may be the directory of possible candidates used by the operation part or a separate register.

In a second embodiment of the invention the speech recognition system comprises a processing means which is prepared for reviewing the candidate list for existence of at least one noise sensitive candidate being similar to at least one directory entry upon truncation of the directory entry, the candidate or both; and depending on a review result re-performing speech recognition on the utterance. The processing means may be an electronic means for processing data. The preparation may be done with a computer program preferably stored in such way that the processing means in active state has access to the program.

### DETAILED DESCRIPTION OF THE INVENTION

The invention is explained in further detail in the following with the aid of drawings, wherein the following is shown:
- FIG 1: a schematic view of an operator on a parcel trans- port belt dictating a part of an address written on a parcel into a voice recognition system,
- FIG 2: a first part of a flow diagram of a speech recogni- tion process, and
- FIG 3: the second part of the flow diagram of FIG 1.

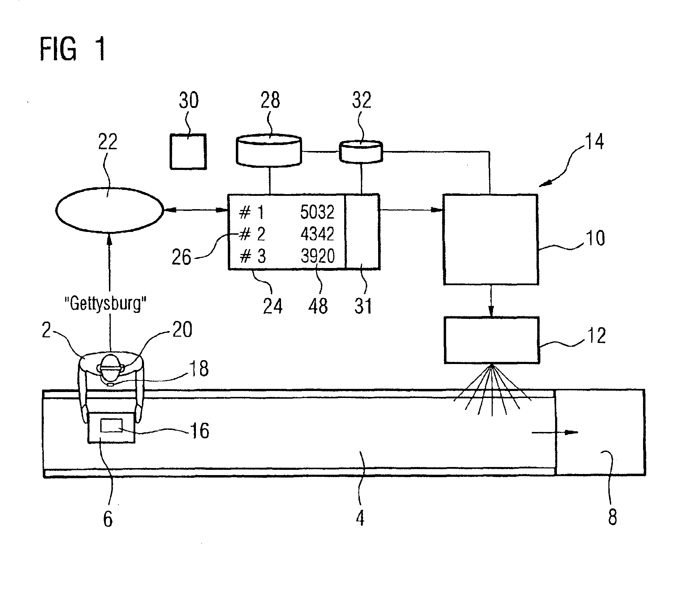

FIG 1 shows a schematic view of an operator 2 on a conveyor belt 4 for transporting objects 6 such as parcels from a position as shown to a sorting system 8 which is depicted only schematically. The sorting system 8 comprises a plurality of boxes for holding parcels, each box receiving parcels directed to a specific destination, such as post code area, or more finely sorted: a district, a town area or a company. If an OCR system 10 is present as depicted in FIG 1 the conveyor belt 4 transports the objects 6 to a camera 12 of the OCR system 10 before transporting them to the sorting system 8. The conveyor belt 4, the OCR system 10 and the sorting system 8 are part of a processing system 14 for processing the objects 6, such as sorting.

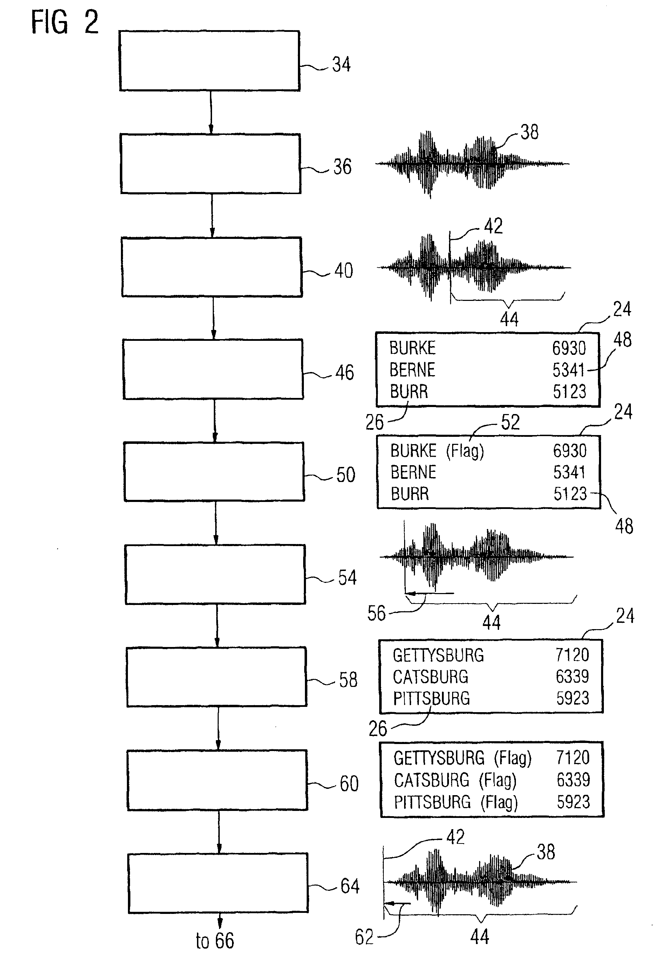

Each object 6 or packet carries an information area 16 such as a sticker with an address written or typed on it, or a transparent window showing an address underneath. Each address contains several character strings of processing information, like a street, a post code and a city, as shown in FIG 2. This process information is used to process the objects 6, i.e. to sort the packets into the respective boxes.

The conveyor belt 4 transports the objects 6 to the operator 2. In another mode the operator 2 grasps one object 6 after the other from a transport vehicle and puts them one after another onto the running conveyor belt 6. Each time the operator 2 holds an object 6 he reads a specific character string of the information area 16, for instance the city name. This utterance is received by a microphone 18 of a communication device 20 and converted into an electric signal forwarded via a respective port to a voice recognition system 22. In the specific example shown in FIG 1 the operator 2 dictates the city name "Gettysburg" into the microphone 18.

The voice recognition system 22 analyzes the utterance and generates in a voice recognition procedure a first ambiguous speech recognition result. The result is a candidate list 24 and comprises of a plurality of elements, such as candidates 26. In FIG 1 the candidate list 24 consists of a number of candidates 26, in this embodiment three candidates 26 numbered with #1, #2, #3 in the drawing. The candidates 26 are picked from a large list of possible candidates stored in a directory 28 together with speech recognition attributes. Each of the picked candidates 26 in the candidate list 24 is ambiguous, since it is neither defined nor clear which of the candidates 26 is correct, there is even the possibility that none of the candidates 26 is correct.

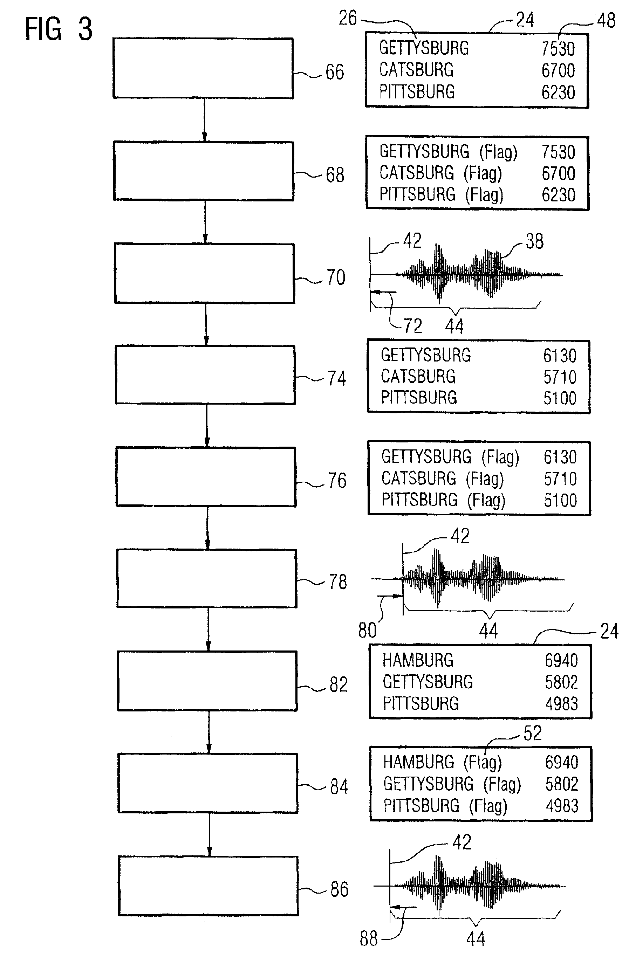

In a method illustrated in FIG 2 and FIG 3 a preferred candidate list 24 is generated and - in case the OCR system 10 is present - handed over to the OCR system 10. Although this OCR procedure is useful, it is not necessary for the invention. Speech recognition alone or other methods may be used, like multi speech recognition on a plurality of speech recognizers in parallel. The OCR procedure is only one possible setup.

The conveyor belt 4 keeps running transporting the object 6 to the camera 12. The camera 12 makes a digital image of the information area 16 and forwards the respective electronic signals to the OCR system 10. The OCR system 10 performs an OCR procedure on the digital image using at least a part of the ambiguous speech recognition result 24 for the OCR procedure. A most probable candidate 26 is selected and the sorting process may be started according to the most probable candidate 26.

For generating a preferred candidate list 24 a method is started as depicted in a flow diagram in FIG 2 and FIG 3. In a first step 34 the operator 2 grabs a packet, reads the predefined character string - i.e. the city name - and puts the packet on the conveyor belt 4. In the second step 36 the utterance is used to generate an electronic signal 38 as basis for the speech recognition process. Prior to the recognition procedure itself the system in step 40 assesses whether the input of the electronic signal 38 is a human utterance or just noise. In case of a human utterance the edge 42 of operation is defined that separates the recognition segment 44 of the utterance upon which the recognition procedure is performed from the preceding segment. Depending on the speech recognition system 22 used the edge 42 of operation may be defined by determining a Backup-and-Restart-Interval.

Now the System 22 performs a speech recognition process 46 of the part of the electronic signal 38 whose onset is defined by the edge 42 of operation or Backup-and-Restart-Interval point. By this a candidate list 24 is generated containing the top recognition candidates 26, each one associated with an individual recognition reliability score 48.

The candidates 26 of the candidate list 24 are then checked in step 50 upon being noise sensitive candidates 26 with the aid of a processing means 30 and a checking routine 31. The processing means 30 is shown in FIG 1 only in a schematically way. It may be connected to the speech recognition system 22, the OCR system 10, the directory 28 and the register 32 and process the candidate list 24 and other data. In another embodiment the processing means 30 is the processing means running the speech recognition process, the OCR process, or the processing of the object.

In one embodiment the register 32 contains all noise sensitive candidates 26 of the directory 28. In another embodiment the directory 28 containing all possible candidates fulfils the function of the register 32 as well, whereby all noise sensitive entries in the directory 28 each are marked with a flag 52, so the register 32 may be dispensed. In this case means 30 checks if one or more of the list candidates 26, i.e. the directory entries or register entries, carry a flag 52 for a noise sensitive directory relationship. In yet another embodiment the processing means 30 is able to identify noise sensitive candidates 26 with the routine 31 without any directory 28 or register 32, working with an algorithm for detecting such candidates 26.

The further procedure is described along with the embodiment of flagging the directory 28. This embodiment preferably entails analyzing the directory 28 to determine those directory entries that share a homophone ending. Absence of phonetic contribution from the leading edge can result in lack relative recognition distance and hence ambiguity or omission. Preferably a pre-analysis of the directory 28 is performed to detect those directory entries where a leading edge phonetic omission maps to another candidate identification due to lack of redundancy. These will mainly be short words.

Since the phonetic similarity is crucial the directory analysis needs to be not only assessed from an alphabetic (homographic) standpoint but primarily from an individual phonetic entry perspective. Here a given alphabetic entry may have several alternative phonetic representations based on common pronunciation differences. Such alternative phonetic representations are considered for the directory entry analysis.

The objective of the directory entry analysis is to flag potential problem entries, i.e. entries, phonetic strings, that lack sufficient redundancy for reliable speech recognition when said entry's utterance has its leading edge truncated. Sufficient redundancy is defined by at least one predefined parameter value. The practice of this embodiment of the invention provides for the flagging of said entries while preferably also providing relational information as to which entries have a leading edge exposure to ambiguity or mapping totally into one another. Such detected leading edge sensitive phonetic transcriptions may be called noise or truncation sensitive directory relationship.

Since each speech recognizer has its own unique algorithms for representing directory alphabetic strings, said pre-analysis will normally have to be performed individually for each recognizer even though the subject lexicon is the same. So when using two (or more) different speech recognizer working with different recognizing algorithms the analyzing of the directory 28 will be done with two (or more) different analyzing parameter. Accordingly the directory 28 will comprise truncation sensitivity flags individually allocated to each of the individual speech recognizers.

The practice of this embodiment of the invention may follow once the directory pre-analysis is completed. During speech recognition processing the candidate list 24 (list of top recognition candidates) the recognizer had in contention when finalizing the speech recognition of an utterance is reviewed.

The candidates 26 of the list 24 are normally associated with individual recognition reliability scores 48 that quantify the relative distance of match that each of the respective top recognition candidates was from utterance energy pulse 38 phonetic string representation. The recognition reliability scores 48 extends and can improve the practice of said invention, however, in principle the next processing steps can be performed without recognition reliability scores 48 information and if only the single top speech recognition candidate is provided by a given recognizer. In the following steps it is assumed that a speech recognition unit outputs up to a pre-specified number top recognition candidates 26 that were in final contention as the identity of said utterance was reach by the speech recognizer 22. Each top recognition candidate 26 has designated its recognition reliability scores 48 as resolved during speech recognition processing 46.

If a noise sensitive candidate 26 is present in the candidate list 24, or in other words: if a noise sensitive directory relationship exists with at least one of the list candidates 26, it is assumed that a leading edge truncation may have effected the list content. Although the current noise sensitive candidate 26 resulted from a speech recognition pass where the utterance audio point start was adjusted backward in real-time from the point of human voice detection by the standard backup and restart interval, there is the chance that the noise sensitive candidate 26 may be wrong due to truncation of the subject utterances leading edge. It could have been that the backup and restart interval was not accurate or adequate to recovery the true utterance leading edge starting point.

Hence in step 54 the edge 42 of operation that separates the recognition segment 44 of the utterance upon which the recognition procedure is performed from the preceding segment is adjusted further back in real-time by a given time period 56, thus increasing the recognition segment 44 or area of recognition of the utterance on which the speech recognition process is performed. The length of the time period 56 may be dependent on one or more parameters like the number of flagged candidates 26 in the list 24, the length of these candidates 26, or another characteristic of these candidates 26.

Then the speech recognition procedure 58 is repeated upon the utterance using the adjusted parameters resulting in a second candidate list 24 as depicted with step 58 in FIG 2. This candidate list 24 may contain new candidates 26, as shown in FIG 2. One of these candidates 26 might be the correct candidate as well as any candidate 26 from the first candidate list 24. So one, some or all candidates 26 from both lists 24 might be chosen as most probable candidates 26 for further processing the parcel 6, for example for passing them to the OCR-system 10. So, as required the allowable list length of ambiguous return from the speech processor(s) may be extended to be passed to applications such as Hybrid Voice or Multi-Speech Recognizer Voting cited above.

In one embodiment of the invention the contents of the new list 24 as shown Figure 2 is examined for any additional noise sensitive candidate 26 that may have surfaced as a result of the adjusted edge 42 (step 60). The respective candidates are marked with a flag 52 as shown in FIG 2. Further in the same or another embodiment changes in the recognition reliability scores 48 between candidates 26 in two consecutive lists 24 are examined.

If a new flagged candidate 26 is present, the edge 42 may be again re-adjusted a certain time period 62 further back in real-time by a given amount (step 64), thus increasing the area of recognition of the utterance on which the speech recognition process is performed. The time period 62 may again be dependent on one or more parameters of the flagged candidates 26 or the changes in the recognition reliability scores 48. The speech recognition procedure is then repeated in step 66 (FIG 3) upon the utterance using the adjusted parameters.

This procedure of re-adjusting the edge 42 and re-performing speech recognition may be repeated each time a new candidate and/or a new flagged candidate appears in the new list respectively.

As shown in FIG 3, the new list 24 does not contain additional noise sensitive candidates 26 from the noise sensitive candidates 26 contained in the previous list 24 (step 68). However, the edge 42 may be re-adjusted (step 70) by another time period 72 and another speech recognition run performed if the scores 48 show significant difference compared to the scores 48 of the previous list 24 (step 66). So the readjustment and re-performance of speech recognition may take place if either a new candidate 26 (flagged or not) appears, or the scores 48 change more than a predefined value, or both.

If the scores 48 show a significant increase, meaning, that the positive delta to the values of the previous list 24 exceed a previously determined value, it is assumed that a truncation has taken place, and the edge 42 for the speech recognition re-run may be moved further back in time as shown in FIG 3, increasing the recognition area 44 of the utterance. If the values 48 have significantly decreased, as shown in step 74, and no new candidate 26 appeared (step 76) said edge 42 may be re-adjusted forward in time (step 78) by a predefined time period 80, reducing the recognition area 44 of the utterance, since it is assumed that the previous readjustment has brought in noise.

If, after repeated speech recognition, additional candidates carrying a sensitivity flag 52 are present, as HAMBURG in step 82 in FIG 3, and the RRS values 48 of the candidates 26 show a significant decrease (meaning, that the negative delta to the values 48 of the previous list 24 is lower than a previously determined value 48) it is also assumed that a truncation has taken place. The edge 42, as shown in step 86, is moved further backward in time to increase the recognition area 44 by a time period 88, even if the scores 48 for any candidates that are also present in the prior list 24 have significantly decreased. This increase may also be induced by the appearance of a new flag as indicated in step 84.

In another embodiment of the invention the successive adjustments of the edge of operation 42 based on the appearance of a new sensitive candidate 26 and successive reinitiating of speech recognition on said utterance may be performed after release of said parcel or screen image.

In another embodiment the practice of this invention can be used in continuous speech recognition especially when the speaker starts their monologue or after pausing.

### List of reference numerals

- 2: operator
- 4: conveyor belt
- 6: object
- 8: sorting system
- 10: OCR system
- 12: camera
- 14: processing system
- 16: information area
- 18: microphone
- 20: communication device
- 22: speech recognition system
- 24: candidate list
- 26: candidate
- 28: directory
- 30: process means
- 31: checking routine
- 32: register
- 34: step
- 36: step
- 38: electronic signal
- 40: step
- 42: edge of operation
- 44: recognition segment
- 46: speech recognition procedure
- 48: recognition reliability score
- 50: step
- 52: flag
- 54: step
- 56: time period
- 58: speech recognition procedure
- 60: step
- 62: time period
- 64: step
- 66: step
- 68: step
- 70: step
- 72: time period
- 74: step
- 76: step
- 78: step
- 80: time period
- 82: step
- 84: step
- 86: step
- 88: time period

## Claims

1. A method for performing electronic speech recognition comprising the steps of:
performing speech recognition (56) on an utterance;
generating a recognition candidate list (24) comprising at least one recognition candidate (26) from the result of the speech recognition (56) by using a directory (28) of possible candidates (26);
reviewing (50) the candidate list (24) for existence of at least one noise sensitive candidate (26) being similar to at least one directory entry upon truncation of the directory entry, the candidate (26) or both; and
depending on a review result re-performing speech recognition (58) on the utterance.

2. The method according to claim 1,
wherein the truncation is a front end truncation.

3. The method according to claim 1 or 2,
and further comprising the step (50) of analyzing the directory upon directory entries being similar to other directory entries upon truncation of at least one of the entries and marking the entries found as being truncation sensitive entries (26).

4. The method according to one of the preceding claims,
wherein the analyzing (50) comprises the step of comparing the list candidate (26) with entries of a register (28, 32) in which truncation sensitive entries are listed.

5. The method according to one of the preceding claims,
wherein the analyzing comprises the step of performing a sensitivity algorithm on the list candidate.

6. The method according to one of claims 3 to 5,
wherein the similarity is a homophonic similarity

7. The method according to one of the preceding claims,
and further comprising the step:
before performing speech recognition adjusting (54) the edge (42) of operation that separates the recognition segment (44) of the utterance upon which the recognition procedure is performed from the preceding segment, and performing speech recognition (58) on said recognition segment (44) of the utterance.

8. The method according to claim 7,
wherein upon existence of a truncation sensitive candidate (26) in the candidate list (24) adjusting the edge (42) of operation, and re-performing the speech recognition procedure (58) upon the utterance using the adjusted edge (42) of operation.

9. The method according to claim 8,
and further comprising the step of repeating the steps of adjusting (64) the edge (42) and re-performing speech recognition (66) if a new truncation sensitive candidate (26) appeared in the most recent candidate list (24) compared to the candidate list (24) before.

10. The method according to claim 8 or 9,
and further comprising the step of repeating the steps of adjusting (70) the edge (42) of operation and re-performing speech recognition (74) if an increase of a recognition reliability score (48) in the most recent candidate list (24) appears compared to the candidate list (24) before.

11. The method according to claim 10,
wherein the increase is an increase of a recognition reliability score (48) of the list's top candidate (26).

12. The method according to one of claims 8 to 11,
wherein the adjustment is an adjustment of the edge (42) of operation of the recognition segment further back in real time.

13. The method according to one of claims 8 to 12,
and further comprising the steps of adjusting (78) the edge (42) of operation of the recognition segment (44) further forward in real time, re-performing speech recognition (82), and repeating this steps of adjusting and re-performing until a new truncation sensitive candidate (26) appears in the most recent candidate list (24).

14. The method according to one of the preceding claims,
and further comprising the step of reading (36) identifying information (16) associated with a good (6) to be processed by an operator (2) generating thus the utterance, wherein the way of processing depends on this information.

15. Speech recognition system comprising an operation part (22) being prepared for performing speech recognition on an utterance and for generating a candidate list (24) of probable results by using a directory (28) of possible candidates (26), and further comprising a register (28, 32) containing directory entries marked as noise sensitive entries if such entry is similar to at least one other directory entry upon truncation of at least one of the entries.
